# EUROPEAN PATENT APPLICATION

(11) **EP 4 047 071 A1**
(43) Date of publication of application: **24.08.2022**
(21) Application number: 21382148.1
(22) Date of filing: 23.02.2021
(51) Int. Cl.: C09J 189/00, C09J 197/00, C09J 199/00

(54) **ADHESIVE COMPOSITIONS COMPRISING BIO-BASED ADHESIVES, AND THEIR USE FOR MANUFACTURING WOOD-BASED COMPOSITES AND FIBREGLASS OR ROCK WOOL INSULATIONS**

(71) Applicant: FORESA TECHNOLOGIES, S.L.U., 36650 Caldas de Reis Pontevedra (ES)
(72) Inventor: FERNÁNDEZ FONDEVILA, LUCIANO, 36650 PONTEVEDRA (ES); LOPEZ-SUEVOS FRAGUELA, FRANCISCO, 36650 PONTEVEDRA (ES); VIZ RODRIGUEZ, FELIPE, 36650 PONTEVEDRA (ES)
(74) Representative: Balder IP Law, S.L.

(57) **Abstract**

The present invention refers to novel formaldehyde-free adhesive compositions comprising at least one bio-based adhesive from a renewable resource, adhesive systems comprising, isolated one of another, an adhesive composition (component A) and at least one hardener agent (component B), as well as an adhesive mixture comprising both the adhesive composition and the at least one hardener agent. These adhesive compositions, systems and mixtures described in this document can be used for manufacturing wood composite boards such as wood fibreboards, particleboards, chipboards, oriented strand boards, plywood and paperboards, but also of fibreglass insulations or rock wool insulations.

## Description

### FIELD OF THE INVENTION

The present invention describes novel formaldehyde-free adhesive compositions comprising at least one bio-based adhesive from a renewable resource, adhesive systems comprising, isolated one of another, an adhesive composition (component A) and at least one hardener agent (component B), as well as an adhesive mixture comprising both the adhesive composition and the at least one hardener agent. In particular, adhesive compositions, systems and mixtures described in this document can be used for manufacturing wood composite boards such as wood fibreboards, particleboards, chipboards, oriented strand boards, plywood and paperboards, but also of fibreglass insulations or rock wool insulations.

### BACKGROUND OF THE INVENTION

Currently, the great majority of industrial wood products are reconstituted materials that are held together by synthetic thermosetting adhesives. The resins used to bind them are in general formaldehyde-based adhesives. However, environmental and health considerations have prompted the introduction of more severe standards regarding the emission of formaldehyde from bonded wood products and, therefore, the development and use of adhesives from renewable resources for the production of environmentally friendly adhesives is receiving an increasing attention nowadays.

Thus, carbohydrates from different natural resources have been used as wood adhesive in the form of polysaccharides, gums, oligomers and monomeric sugars. These carbohydrates may be used directly as wood adhesive or, alternatively, may be transformed into furanic resins by acid degradation. Carbohydrate adhesives may be obtained from different renewable resources. In particular, waste vegetable materials may be used to obtain furanic resins [A. Pizzi, J. Adhesion Sci. Technol, Vol. 20, No 8, pp 829-846 (2206*)*]; whereas crab and shrimp shells may be used as a natural resource of chitin, which may be derived to chitosan from deacetylation. Chitosan is a copolymer of β-(1,4)-linked 2-acetamido-2-deoxy-D-glucopyranoses and 2-amino-2-deoxy-D-glucopyranoses which has been also described as bio-adhesive in wood manufacturing [Ji Xiaodi et al, Royal Society Open Science, 5(4), 172002/1-172002/11 (2018*)*].

Plant protein is another natural resource to produce environmentally friendly adhesives for wood manufacturing. Several studies have been conducted providing protein-based adhesives derived from different crops such as soy, canola, cottonseed, wheat gluten, zein and peas. In particular, acceptable results have been reported by using soy proteins-based adhesives added to traditional synthetic wood adhesive or after partial hydrolysis and modifications of the soy protein [Fatemeh Ferdosian, et al.; Polymers, 9, 70 (2017*);* A. Pizzi, J. Adhesion Sci. Technol, Vol. 20, No 8, pp 829-846 (2206*)*].

Compounds of phenolic nature such as, for example, condensed tannins or lignin may also be used as bio-adhesive in wood manufacturing. These polyphenolic based adhesives may be obtained from renewable feedstock, in particular, from vegetable biomass. Thus, condensed tannins and their flavonoid precursors are known for their wide distribution in nature and particularly for their substantial concentration in the wood and bark of various trees. These include various Acacia (wattle or mimosa), Schinopsis (quebracho), Tsuga (hemlock), Rhus (sumach), Pinus (pine), Carva illinoinensis (pecan) and Pseudotsuga mesiesii (Douglas fir) species. Lignin adhesives have probably been the most intensely researched one as regards wood adhesives applications, since this phenolic material are abundant in nature and of low cost [Fatemeh Ferdosian, et al.; Polymers, 9, 70 (2017*);* A. Pizzi, J. Adhesion Sci. Technol, Vol. 20, No 8, pp 829-846 (2206*)*].

Unsaturated vegetable oils such as linseed oil have also been used in producing wood adhesives by epoxidation of the oil double bonds followed by cross-linking with a cyclic polycarboxylic acid anhydride to build up molecular weight. Due to its dual nature, phenolic nuclei plus unsaturated fatty acid chain, cardanol, which may be found in cashew nut shell liquid, is also a potential natural raw material for the synthesis of water-resistant resins and polymers for wood manufacturing [A. Pizzi, J. Adhesion Sci. Technol, Vol. 20, No 8, pp 829-846 (2206*)*].

### Manufacture of MDF boards

The Composite Panel Association defines medium density fibreboard (MDF) as a dry-formed panel product manufactured from lignocellulosic fibres combined with a synthetic resin or other suitable binder. The panels are compressed to a density of from 496 to 801 kilograms per cubic meter (kg/m³) in a hot press. The entire interfibre bond is formed by a synthetic resin or other suitable organic binder.

The general steps used to produce MDF include mechanical pulping of wood chips to fibres (refining), drying, blending fibres with adhesive resin, catalyst and sometimes wax, forming the resinated material into a mat, and hot pressing.

### Manufacture of Particleboards

Particleboard is defined as a panel product manufactured from lignocellulosic materials, primarily in the form of discrete particles, combined with a synthetic resin or other suitable binder and bonded together under heat and pressure.

Particleboard is produced in densities ranging from around 590 kg/m³ to greater than 800 kg/m³. Although some single-layer particleboard is produced, particleboard generally is manufactured in three layers. The outer layers are referred to as the surface or face layers, and the inner layers are termed the core layers. Face material generally is finer than core material. By altering the relative properties of the face and core layers, the bending strength and stiffness of the board can be increased.

The general steps used to produce particleboard include raw material procurement or generation, classifying by size, drying, blending with adhesive resin, catalyst and wax, forming the resinated material into a mat, hot pressing, and finishing.

For both MDF and Particleboard manufacture, wax emulsions (typically paraffin-based) are added to impart water resistance, increase the stability of the finished product under wet conditions, and to reduce the tendency for equipment plugging. Catalysts are used to accelerate the resin cure and to reduce the press time. Formaldehyde scavengers also may be added in the blending step to reduce formaldehyde emissions from the process.

### Manufacture of fibreglass insulations and rock wool insulations

The manufacture of fibreglass and rock wool insulation products generally comprise a step of manufacture of the rock wool and fibreglass themselves, which can be performed by different procedures, for example according to the techniques known in the state of the art as rotary process (internal centrifuge), cascade process (external centrifuge), and flame attenuation process (pot & marble).

To ensure the assembly and adhesion of the fibres, an adhesive resin, generally a thermosetting resin, is projected onto the fibres (glass fibre or rock wool), or mixed with the fibres. The mixture of fibres and resin is subjected to a thermal treatment, at a temperature generally higher than 100 °C, in order to effect the polycondensation of the resin and thus obtain a thermal and/or acoustic insulation product. Commonly used adhesive compositions comprise resins derived from formaldehyde, similar to those used in the manufacture of wood derived boards or wood composite boards. During the manufacture further additives may be added to the mixture of fibres and adhesive, such as for example catalysts for crosslinking the resin or waterproofing emulsions (typically paraffin-based). That is, the manufacture of fiberglass insulations and rock wool insulations has many similarities to the manufacture of wood derived boards or wood composite boards.

When manufacturing wood-based composites such as MDF and particleboard, bioadhesives may provide excellent long-term bond durability, and higher fibre/chips moisture tolerance during the hot-press than formaldehyde-based resins. Nevertheless, the addition of a hydrophobic agent such as a paraffin emulsion is still needed in order to impart water resistance, increase the stability of the finished product under wet conditions. More specifically, the hydrophobic agent is most important as it protects the fibres to meet the cold-water tests, in particular, the swelling and water absorption tests. However, hydrophobic agents currently used, typically paraffin-based emulsions, cannot be incorporated into adhesive compositions to be stored until use, because they are not compatible with the other components of the formulation, in particular, if added in large quantities. As a result of this lack of compatibility, adhesive compositions comprising conventional wax emulsions cannot be stored, because different phases separate a few hours after being manufactured, thus reducing the effectiveness of the hydrophobic agent.

### DESCRIPTION OF THE INVENTION

The inventors surprisingly found that the adhesive composition described in this document, which comprises the combination of environmentally friendly vegetable oils and at least one bio-based adhesive, all of them obtainable from renewable resources, is able to formulate adhesive mixtures achieving a durable adhesion and the required hydrophobicity, when used in the manufacture of wood composite boards, fibreglass insulations or rock wool insulations. Besides that, the ingredients present in the adhesive composition of the invention are completely compatible and stable over time.

The current invention provides some important advantages in the manufacturing of wood composite boards such as fibreboards, particleboards, chipboards, plywood, paperboards or oriented strand board; or of fibreglass insulations or rock wool insulations. Since the adhesive active ingredients and the hydrophobic agent are present in the same homogeneous adhesive composition, they can be homogeneously applied on the surface of the wood fibre, fibreglass or rock wool. Additionally, the vegetable oils used as hydrophobic agent in this invention does not jeopardize the gluing efficiency of the natural environmentally friendly adhesive substances (i.e., the adhesive active ingredients) comprised in the composition, contrary to typical paraffin emulsions, which negatively affect perpendicular traction because the adhesiveness to the fibre is reduced when paraffin is used above a certain amount. The current invention also allows a simplified and more economic manufacturing process of wood composite boards, as well as fibreglass insulations or rock wool insulations. More specifically, the use of the adhesive composition and system described in this document avoids the need for additional infrastructures such as a storage tank and specific circuits usually required in conventional processes for carrying out a separate application of the hydrophobic agent, as well as it avoids the need for additional infrastructures such as a storage tank, mixers and specific circuits, and the manpower required for mixing the adhesive and the hydrophobic agent on site right before use.

Therefore, adhesive composition according to the invention provides a more efficient gluing with a long-lasting bonding with wood fibres or chips, fibreglass or rock wool, wherein the vegetable oils present in such composition complements the action of the bio-based adhesives by protecting them from water and helping to meet the swelling test after immersing the wood composite board specimen 24 h in water at 20°C, and the compatibility of both active agents in a single homogeneous composition provides the above-mentioned advantages over prior art.

In the manufacturing of fibreglass insulations or rock wool insulations, the hydrophobic agents present in the adhesive compositions of the invention may also help to reduce dust generated during the manufacturing process, so reducing the amount of anti-dust agent needed.

In a first aspect, the present invention is related to an adhesive composition comprising:
- at least one bio-based adhesive,
- at least one surfactant selected from anionic and non-ionic surfactants,
- at least one vegetable oil, preferably selected from hydrogenated or partially hydrogenated palm oil, soy oil and a combination thereof,
- optionally, a viscosity reducing agent preferably selected from glycol, triacetin and a combination thereof; and
- water.

As previously mentioned, adhesive compositions described in this document provide an important advantage over prior adhesive compositions, because all ingredients required, but the hardener agent, can be included in the same formulation, which remains stable over time. More specifically, the shelf life of the adhesive composition of the invention is at least 2 weeks. In some particular embodiments of the current invention, the shelf life of the adhesive composition is at least 30 days, more preferably at least 50 days and even more preferable at least 60 days.

"Shelf life" in the frame of the present invention is meant to be the period of time during which the adhesive composition of the invention can be stored and remain suitable for use. Preferably, this term refers to the period of time during which no separation of phases is observed in the adhesive composition being storage at a temperature from 15°C to 30°C, preferably from 20°C to 25°C. The shelf life can be defined as the period of time that the adhesive composition according to the invention can be stored at a temperature from 15°C to 30°C, preferably from 20°C to 25°C, until its viscosity becomes higher than 1000 cP, measured at 25°C and shear rate of 100 s⁻¹ in a Peltier-plate Rheometer DHR-2 of TA Instruments.

The adhesive composition of the current invention may optionally include other ingredients such as biocides, defoamers and/or a viscosity reducing agents such as glycol, triacetin or a combination thereof in order to adjust viscosity to the required values without jeopardize the stability of the adhesive composition.

In the frame of this invention, the terms "bio-based adhesive" or "bio-adhesive" are used interchangeably and both refer to a substance that, interposed between two different materials, is capable of holding those materials together and, additionally, this adhesive substance or active ingredient can be obtained from renewable resources. In particular, the "bio-based adhesive" or "bio-adhesive" according to the invention is a substance such as a resin, in particular a formaldehyde-free resin, capable of hardening by auto-condensation and/or by using a hardener or catalyst. These bio-adhesive substances or active ingredients may be obtained from renewable feedstock widely distributed in nature, vegetable biomass primarily, although other suitable resources such as, for example, crustaceous shells are also possible.

The at least one bio-based adhesive comprised in the adhesive composition of the invention is preferably selected from soy protein, chitosan, furanic resin, unsaturated oil resin, polyphenolic based polymers and a combination thereof. The polyphenolic based polymer may be, for example, lignin or polyflavonoids (i.e., polymers which main polyphenolic patterns are formed by flavonoid monomers) or a combination thereof.

In particular, polyphenolic based polymers according to the invention are free from formaldehyde or monomers derived from formaldehyde and, therefore, they are free from phenol formaldehyde resins. Thus, the polyphenolic based polymers preferably are lignin or polyflavonoids (i.e., polymers which main polyphenolic patterns are formed by flavonoid monomers) or a combination thereof, provided that they are free from phenol formaldehyde resins.

In those embodiments of the invention wherein the bio-adhesive may be obtained from vegetable biomass, the bio-adhesive substances present in the adhesive composition may be comprised in a vegetable extract.

According to the invention described herein, the adhesive composition preferably comprises a vegetable extract comprising polyphenolic-based polymers such as polyphenolic resins as bio-adhesive substance, more preferably a vegetable extract comprising polymers with a polyphenolic pattern mainly formed by flavonoids units with different condensation degree (flavan-3-ol and flavan-2,4-diol) as well as other flavonoids analogs. *[*Roux DG, Ferreira D, Botha JJ. Forest. Products. Journal 26, 27 (1980*);* Roux DG, Ferreira D, Botha JJ. Journal of Agricultural and Food Chemistry 28, 216 (1980*);* Roux DG, Ferreira D, Hundt HKL, Malan E. Applied Polymer Symposium 28, 335 (1975)]. These bio-adhesive substances are known in the art as condensed tannins, as well as polyflavonoids or proanthocyanins polymers.

The vegetable extract comprising polyflavonoids polymers as bio-based adhesives is preferably selected from mimosa bark extract, quebracho wood extract, hemlock bark extract, sumach bark extract, pine bark extract, pecan nut pith extract, Douglas fir bark extract and a combination thereof. More preferably, the vegetable extract comprised in the adhesive composition of the invention is selected from mimosa bark extract, pecan nut pith extract, pine bark extract and a mixture thereof.

Pecan nut pith extracts are more reactive than other vegetable extracts such as mimosa bark or pine bark extracts due to its high content of flavonoids units comprising both phloroglucinol A rings and pyrogallol B rings. For this reason, despite its limited availability in particular in Spain, adhesive compositions according to some embodiments of this invention comprise at least one pecan nut pith extract.

According to other embodiments of the invention, however, the adhesive composition preferably comprises mimosa or pine extracts, because they provide a suitable adhesive reactivity and, additionally, they can be available in sufficient quantity for industrial manufacturing of wood composite boards, fibreglass insulations or rock wool insulations at a reasonable price. In particular, mimosa bark extracts are commercially available even in high volume. Additionally, the shelf life of the adhesive composition comprising these vegetable extracts may be at least 2 weeks, in particular at least 30 days, more specifically at least 50 days and even more specifically at least 60 days.

Adhesive compositions according to the particular embodiments of the invention comprise at least one vegetable extract comprising polyflavonoids preferably having a Stiasny number higher than 65%, more preferably equal to or higher than 75%.

The Stiasny number method is used to determine the polyphenol content of the extracts according to the procedure proposed by Yazaki and Hillis (see Yazaki, Y., Hillis, W.E., 1980. Molecular size distribution of radiata pine bark extracts and its effects on properties. Holzforschung 34, 125-130). According to this method, an exact amount of the dried extract (approx. 0.250 g) is dissolved in distilled water (25ml), then 2.5ml of 10M HCL and 3.2ml of 55 wt.% formaldehyde water solution are added. The mixture is heated under reflux for 30min. After that, the suspension is filtered under vacuum using a 0.1 µm type VVLP filter (Durapore Membrane filters), the precipitate is washed with warm water, and then dried at 105°C until constant weight. The Stiasny number is the ratio of the oven-dried weight of the precipitate to the initial dried extract weight, expressed as a percentage.

In some embodiments of the invention, at least one of the vegetable extracts comprised in the adhesive composition is a mimosa bark extract, preferably having Stiasny number higher than 65%, and more preferably a viscosity which ranges from 100 cP to 1000 cP (measured in a 50% w/w water solution at 25°C and shear rate of 100 s-1 in a Peltier-plate Rheometer), a pH (50% w/w water solution at 25°C) from 5 to 7.5 and/or a reactivity/gel time (50% w/w water solution with 6.5% w/w Hexamine Powder at 100°C) from 100 to 200 s. In particular, the mimosa bark extracts present in the adhesive composition of the invention may be a commercial product.

In some embodiments of the invention, at least one of the vegetable extracts comprised in the adhesive composition is a pine bark extract, preferably having Stiasny number equal to or higher than 75%, and more preferably equal to or higher than 80%. Besides that, this pine bark extract has a viscosity which preferably ranges from 100 cP to 1000 cP (measured in a 36% w/w water solution at 25°C and shear rate of 100 s-1 in a Peltier-plate Rheometer), a pH (36% w/w water solution at 25°C) from 6 to 8, a reactivity/gel time (36 % w/w water solution with 6.5wt.% Hexamine Powder at 100°C) from 50 to 110 s and/or a reactivity/gel time (36 % w/w water solution with pH 7 with 12% w/w tris(hydroxymethyl)nitromethane powder) from 50 to 70 s.

Adhesive compositions according to the invention may comprise a combination of different polyflavonoid vegetable extracts. In particular, they may comprise one or more of the mimosa bark extract and/or the pine bark extract as described in this document.

The surfactant comprised in the adhesive composition according to the invention may be at least one surfactant selected from anionic and non-ionic surfactants. In particular embodiments of the invention, such surfactant is a mixture of at least one non-ionic surfactant and at least one anionic surfactant.

"Non-ionic surfactants" are surfactants that do not bear an electrical charge. Although they do not contain an ionic group as their hydrophilic component, hydrophilic properties are conferred on them by the presence of a number of oxygen atoms in one part of the molecule which are capable of forming hydrogen bonds with molecules of water. For example, many long chain alcohols exhibit some surfactant properties, such as fatty alcohols, cetyl alcohol, stearyl alcohol, and cetostearyl alcohol, and oleyl alcohol. Other non-ionic surfactants are alcohol ethoxylates, polyglycol ethers, polyoxyethylene alkyl ethers, secondary alcohol ethoxylates, polyoxyethylene alkyl ethers, polyalkyl glycol alkyl ethers (e.g. polyethylene and polypropylene glycol alkyl ethers), glucoside alkyl ethers, polyethylene glycol alkylphenyl ethers or glycerol alkyl esters. In some embodiments of the invention, the non-ionic surfactant is selected from secondary alcohol ethoxylate and ethoxylated fatty alcohol.

"Anionic surfactants" are surfactants that contain anionic functional groups at their head, such as sulfate, sulfonate, phosphate, and carboxylates. Prominent alkyl sulfates include ammonium lauryl sulfate, sodium lauryl sulfate (sodium dodecyl sulfate, SLS, or SDS), and the related alkyl-ether sulfates sodium laureth sulfate (sodium lauryl ether sulfate or SLES), and sodium myreth sulfate. Also docusate (dioctyl sodium sulfosuccinate), perfluorooctanesulfonate (PFOS), perfluorobutanesulfonate, alkyl-aryl ether phosphates and alkyl ether phosphates are anionic surfactants. Suitable alkyl carboxylates include C12-C22 alkyl carboxylates, such as carboxylates of lauric acid (C12), myristic acid (C14), palmitic acid (C16), stearic acid (C18), oleic acid (C18:1), C20+C22 fatty acids, or a combination thereof. In the adhesive composition according to the invention, preferably at least about 50 wt.% of the fatty acids in the total amount of the anionic surfactant are fatty acids having from 20 to 22 carbon atoms. In the case not sufficient fatty acids of said length are contained in the anionic surfactant used as raw materials, fatty acids having 20 to 22 carbon atoms may be added to the formulation, until the indicated percentage is reached.

In some embodiments of the invention, the non-ionic surfactants preferably are alcohol ethoxylates, whereas the anionic surfactants preferably are C12-C22 alkyl carboxylates such as the carboxylates of lauric acid (C12), myristic acid (C14), palmitic acid (C16), stearic acid (C18), oleic acid (C18:1), or C20+C22 fatty acids. Preferably, the anionic surfactant is a mixture of diethyl ammonium carboxylate of palmitic acid, stearic acid and C20-C22 fatty acids.

Preferably, the adhesive composition according to the invention may comprise from 0.04 wt.% to 0.5 wt.% of at least one surfactant selected from anionic and non-ionic surfactants, more preferably of a mixture of an anionic and non-ionic surfactant as described herein.

In the adhesive composition of the invention, the surfactants may either be added or obtained in situ by a saponification reaction. The weight percentages indicated refer to the final concentration of surfactants within the adhesive composition, independently of whether they were added as such or generated in situ for example by reaction of fatty acids with a base.

Typical bases which can be added to the adhesive composition of the invention to generate the surfactant in situ are those which may be used in a saponification. Such bases may include, but are not limited to alkali metal hydroxides such as sodium or potassium hydroxide, preferably sodium hydroxide, or other alkaline compounds such as alkali metal carbonates, alkaline earth hydroxides, ammonia, or organic amines such as an ethanolamine. In particular, the base may be selected from ammonia and an ethanolamine such as monoethanolamine, diethanolamine, triethanolamine or a combination. Preferably, the ethanolamine is diethanolamine.

The amount of base comprised in the adhesive composition of the invention may depend on the amount of surfactant and base used. In those particular embodiments, wherein the adhesive composition comprises from 0.04 wt.% to 0.5 wt.% of at least one surfactant selected from anionic and non-ionic surfactants, more preferably of a mixture of an anionic and non-ionic surfactant as described in this document, and the base is an ethanolamine, preferably diethanolamine, the amount of base may range from 0.02 wt.% to 0.3 wt.% in respect of the total weight of the adhesive composition.

The adhesive composition of the invention comprises at least one vegetable oil, preferably selected from hydrogenated or partially hydrogenated palm oil, soy oil and a combination thereof.

"Hydrogenated or partially hydrogenated palm oil" in the frame of the present invention is intended to encompass any level or extent of hydrogenation, so that the term only excludes non-hydrogenated oil, i.e., natural oil that has not been submitted to any kind of hydrogenation.

The iodine value of the total amount of vegetable oils in the adhesive composition is preferably above 10 g of iodine per 100 g of the total amount of oils, since the compositions therewith obtained are kinetically much more stable than if the iodine value is below 10.

In some embodiments, the soy oil in the formulation is non-hydrogenated soy oil, having an iodine value ranging from 120 to 155 gr iodine per 100 gr of soy oil.

In particular embodiments of the invention, the adhesive composition described herein comprises from 0.6 wt. % to 7.4 wt.% of hydrogenated or partially hydrogenated palm oil, and from 0.06 wt. % to 0.8 wt.% of soy oil, in particular, non-hydrogenated soy oil.

Additionally, the adhesive composition of the invention may comprise a viscosity reducing agent preferably selected from glycol, triacetin and a combination thereof.

"Viscosity reducing agent" in the frame of the present invention is meant to be any substance suitable for reducing the viscosity of the adhesive composition to the desired value. Viscosity ranges and values specified in this document are expressed in cP, a well-known viscosity unit commonly used in the technical field of the invention. These viscosity ranges and values can be unambiguously converted to the corresponding ranges and values according to SI Units (Pa s), since that 1 cP is equal to 10⁻³ Pa s. For instance, the adhesive composition of the invention preferably has a viscosity from 10 cP to 1000 cP, i.e., from 0.01 Pa s to 1.0 Pa s.

This viscosity reducing agent may be added to the adhesive composition described in this document in order to reduce the viscosity of the adhesive composition to a value equal to or lower than 1000 cP, preferably from 10 cP to 1000 cP, and more preferably from 20 cP to 600 cP, wherein the viscosity is measured using a Rheometer DHR-2 (TA Instruments), with a geometry Peltier-plate, so that the apparent viscosity is measured when the stationary regime is achieved in a flow test at 25°C and shear rate of 100 s-1.

"Glycol" in the frame of the present invention is meant to be any substance that contains two hydroxyl groups. More specifically, the term glycol refers to a dihydric alcohol, also known as diol, in which the two hydroxy groups are on different carbon atoms. Preferably, the glycol present in either the adhesive composition or the hardening composition described herein may be an ethylene glycol or propylene glycol derivative, but it is not limited to said glycols. In particular, the glycol may be a compound of formula HOCH₂CH₂CH₂(OCH₂CH₂CH₂)ₘOH, wherein m is equal to or higher than 0, preferably m ranges from 0 to 2; or preferably the glycol may be a compound of formula HOCH₂CH₂(OCH₂CH₂)ₙOH, wherein n is equal to or higher than 0, preferably n ranges from 0 to 2, and more preferably the glycol is selected from monoethylene glycol and diethylene glycol.

"Triacetin" refers to a triglyceride having the chemical names of 1,2,3-triacetoxypropane or 2,3-diacetyloxypropyl acetate, which corresponds to the CAS number 102-76-1. Triacetin is suitable as a reducing viscosity agent and to enhance the tack of the adhesive system.

The adhesive compositions described in this document may comprise further additives such as colorants, additional hydrophobic agent, biocides, antifoaming agents or a combination thereof. One or more of these additives may be added to the adhesive composition of the invention just before its use or they may be added previously, for example during the manufacturing of the adhesive composition, provided that none of these further additives negatively affect the stability of the adhesive composition of the invention during storage.

The adhesive composition according to the invention preferably comprises:
- 28 wt.% to 51 wt.% of at least one vegetable extract comprising polyflavonoids,
- 0.04 wt.% to 0.5 wt.% of at least one surfactant selected from anionic and non-ionic surfactants, the surfactant being added as such or obtained in situ by addition of a base, preferably between 0.02 wt.% to 0.3 wt.% of ethanolamine,
- 0.6 wt. % to 7.4 wt.% of hydrogenated or partially hydrogenated palm oil,
- 0.06 wt. % to 0.8 wt.% of soy oil,
- 0 to 17 wt.% of a viscosity reducing agent preferably selected from glycol, triacetin and a combination thereof; and
- 32 wt.% to 65 wt.% of water;
wherein all amounts are expressed by weight in respect to the total weight of the adhesive composition, and the sum of these amounts is equal to or lower than 100 %;
wherein the viscosity of the adhesive composition is preferably from 10 cP to 1000 cP, more preferably from 20 cP to 600 cP, measured using a Rheometer DHR-2 (TA Instruments), with a geometry Peltier-plate, so that the apparent viscosity is measured when the stationary regime is achieved in a flow test at 25°C and shear rate of 100 s-1.

Adhesive composition according to these embodiments are completely stable over time and, therefore, their shelf life is of at least 2 weeks. In some particular embodiments of the current invention, the shelf life of the adhesive composition is at least 30 days, more preferably at least 50 days and even more preferably at least 60 days.

Consequently, the adhesive composition of the invention allows to work in a broad range process conditions, in particular, in MDF and particleboard manufacturing, since the positive effects of ingredients present in the adhesive composition (i.e., adhesive resin, hydrophobic agent and, optionally, viscosity reducing agent) are optimized.

In some embodiments of the invention, the adhesive composition described in this document comprises:
- 28 wt.% to 49 wt.% of at least one vegetable extract comprising polyflavonoids,
- 0.04 wt.% to 0.5 wt.% of at least one surfactant selected from anionic and non-ionic surfactants, the surfactant being added as such or obtained in situ by addition of a base, preferably between 0.02 wt.% to 0.3 wt.% of ethanolamine,
- 0.6 wt. % to 7.2 wt.% of hydrogenated or partially hydrogenated palm oil,
- 0.06 wt. % to 0.8 wt.% of soy oil,
- 0 to 9 wt.% of a viscosity reducing agent preferably selected from glycol, triacetin and a combination thereof; and
- 45 wt.% to 65 wt.% of water;
wherein all amounts are expressed by weight in respect to the total weight of the adhesive composition, and the sum of these amounts is equal to or lower than 100 %;
wherein the viscosity of the adhesive composition is preferably from 10 cP to 1000 cP, more preferably from 20 cP to 600 cP, and even more preferably from 20 cP to 300 cP, measured using a Rheometer DHR-2 (TA Instruments), with a geometry Peltier-plate, so that the apparent viscosity is measured when the stationary regime is achieved in a flow test at 25°C and shear rate 100 s-1.

This adhesive composition is particularly suitable for manufacturing MDF boards, preferably using a blowline system. In this manufacturing process, wood fibres are first blended with an adhesive mixture of components A (adhesive composition) and B (hardener agent) according to the invention and, after that, dried until a humidity from 8 wt.% to 20 wt.% (based on oven-dried glued fibre). Therefore, the total solid content of the adhesive composition used in this process can be lower than, for example, adhesive compositions intended to be used in particleboard manufacturing, thus avoiding or minimizing problems associated with viscosity, and improving the stability of the adhesive composition.

The concentration of the solid content of the vegetable extract comprising polyflavonoids is related to the viscosity of the adhesive composition. The lower the viscosity, the easier the pumping of the adhesive composition through the gluing circuit, and additionally, the smaller the size of the drop sprayed on the fibre in the blow-line and, therefore, a more effective gluing is achieved.

In some other embodiments of the invention, the adhesive composition comprises:
- 30 wt.% to 51 wt.% of at least one vegetable extract comprising polyflavonoids,
- 0.04 wt.% to 0.5 wt.% of at least one surfactant selected from anionic and non-ionic surfactants, the surfactant being added as such or obtained in situ by addition of a base, preferably between 0.02 wt.% to 0.3 wt.% of ethanolamine,
- 0.6 wt. % to 7.4 wt.% of hydrogenated or partially hydrogenated palm oil,
- 0.06 wt. % to 0.8 wt.% of soy oil,
- 2 to 17 wt.% of a viscosity reducing agent preferably selected from glycol, triacetin and a combination thereof; and
- 32 wt.% to 56 wt.% of water;
wherein all amounts are expressed by weight in respect to the total weight of the adhesive composition, and the sum of these amounts is equal to or lower than 100 %;
wherein the viscosity of the adhesive composition is preferably from 10 cP to 1000 cP, more preferably from 20 cP to 600 cP, and even more preferably from 50 cP to 400 cP, measured using a Rheometer DHR-2 (TA Instruments), with a geometry Peltier-plate, so that the apparent viscosity is measured when the stationary regime is achieved in a flow test at 25°C and shear rate of 100 s-1.

Typically, the viscosity of aqueous solutions having a solid content of pine bark extract higher than 45 wt.% is so high that this solution is difficult to handle. Due to the higher reactivity of polyflavonoid-based adhesive active ingredients comprised in pine bark extracts, however, the amount of solid content of pine bark extract specified herein is able to achieve a suitable adhesive effect, in particular when the Stiasny number of the pine bark extract is equal to or higher than 75%.

This adhesive composition is particularly suitable for manufacturing particleboards. Different to MDF manufacturing in the blowline, the adhesive mixture to be used in particleboards manufacturing must have the highest possible solids content, while maintaining a viscosity which enables it to be pumped through the gluing circuit and uniformly sprayed on the particles. In the manufacturing of particleboards, glued wood chips are not dried before being press and, therefore, an excess of humidity from the adhesive mixture cannot be corrected. If the humidity of the glued wood chips is excessive, once such glued wood chips are pressed at wording temperatures, typically from 150°C to 240°C, a lot of vapour pressure is generated which can cause the board to burst. Typically, the way to avoid or at least minimize bursting due to excessive glued fibre moisture is to reduce the manufacturing line speed and/or press temperatures to enable more gradual water steam output and/or to reduce the vapour pressure generated, but this leads to a reduction in productivity. Advantageously, the use of the adhesive composition of the invention makes it possible to work with a higher glue particle moisture (in particular, this moisture may range from 8 wt.% to 20 wt.%), especially when using pine bark extracts or pecan nut pith extracts, without the need to reduce the speed of the manufacturing line to avoid problems due to an excess of water vapor in the hot-press. As a result of this higher moisture of glued particles, several properties of the particleboards (MDF as well) such as thickness swelling and internal bond after a V-100 cycle or V-313 cycle can be improved.

The adhesive composition according to these embodiments of the invention comprises from 2 wt.% to 17 wt.% by weight of at least one viscosity reducing agent preferably selected from glycol, triacetin and a combination thereof, in order to adjust the viscosity of the adhesive composition to a range from 10 cP to 1000 cP, preferably from 20 cP to 600 cP, and more preferably from 50 cP to 400 cP, measured using a Rheometer DHR-2TA Instruments viscosimeter, with a geometry plate-plate, so that the apparent viscosity is measured when the stationary regime is achieved in a flow test at 25°C and shear rate 100 s-1.

The adhesive composition according to the invention may be manufactured sequentially and gradually adding each of the ingredients comprised in the adhesive composition to water, under stirring or equivalent means of mixing so that homogenization of the ingredient added is achieved before starting the addition of the next. In particular, the adhesive composition described herein may be manufactured by gradually and sequentially adding surfactants and vegetable oils to water, while maintaining the mixture under stirring or equivalent means of mixing and the temperature between about 60 and about 100°C. Optionally, further additives such as bases, defoamers or biocides may also be added to the mixture. Subsequently the heated mixture obtained may be cooled until reaching room temperature (i.e., a temperature of 20-25°C). A further amount of water may be added, if required, and the bio-based adhesive may be gradually added to the mixture under stirring or equivalent means of mixing, thus obtaining the adhesive composition according to the invention. In particular embodiments, the bio-based adhesive used may be a vegetable extract in solid form or aqueous solution.

The viscosity of the adhesive composition may then be measured using a Rheometer DHR-2 (TA Instruments), with a geometry Peltier-plate, so that the apparent viscosity is measured when the stationary regime is achieved in a flow test at 25°C and shear rate of 100 s-1. If the viscosity of the adhesive composition is higher than the desired value, in particular, higher than 1000 cP, water or a viscosity reducing agent as described in this document can be added, the composition is then stirred until uniformity and the viscosity can be measured again. This procedure can be repeated as many times as required until achieving the required viscosity within the range specified for the adhesive composition of the invention.

The aqueous solution of vegetable extract comprising polyflavonoid polymers may be commercially available or prepared in house from a solid vegetable extract or, alternatively, from an aqueous solution of vegetable extract with a different solid content.

A further object of the present invention refers to an adhesive system comprising, isolated one of another:
- Component A: the adhesive composition as defined in this document, and
- Component B: at least one hardener agent, preferably the at least one hardener agent is comprised in a hardening composition further comprising water.

Therefore, the adhesive system of the invention allows a more effective and long-lasting gluing, in particular, in the manufacture of wood composite boards such as MDF or particleboard, because both the adhesive and hydrophobic agents are comprised in a single monocomponent formulation (component A).

"Hardener agent" or "catalyst" in the frame of the present invention is meant to be any substance suitable to be used to cure bio-based adhesive and, in particular, those bio-based adhesives described in this document. In those particular embodiments of the invention wherein the bio-based adhesives are polyphenolic polymers and, in particular, polyflavonoids, the hardener agent may be selected from the group comprising hexamine, tris(hydroxymethyl)nitromethane, glyoxal, Lewis acids, 2,5-dihydroxymethylfuran, 2,5-dihydroxymethylfuran moieties, polyethyleneimine (PEI), but is not limited to said catalysts. Preferred Lewis acid may be silica, boric acid or aluminium trichloride. As previously mentioned, the catalyst may be a 2,5-dihydroxymethylfuran moiety, i.e., a compound comprising 2,5-dihydroxymethylfuran as part of a bigger structure such as, for example, 2,5-dihydroxymethylfuran carbohydrate oligomers. Said catalysts are needed to cure adhesive polyflavonoid resins, which can be used in the manufacture of all kinds of wood derived boards, including fibreboards, particleboards, chipboards, oriented strand boards, and fibreglass insulations or rock wool insulations.

"Wood composite boards" in the frame of the present invention refers to boards obtained by binding and compressing natural fibres, optionally in combination with synthetic fibres, Examples thereof, but not limited to, are particleboard, fibreboard (MDF and HDF), chip boards, oriented strand boards and plywood.

Preferably, the hardener agent is hexamine, since this compound in combination with the polyflavonoids-based adhesive composition described in this document is able to provide MDF boards that at least comply with the requirements for structural board for use in dry conditions (MDF.LA) according to UNE-EN 622-5: 2010 and, additionally, hexamine can be considered as a commodity. Consequently, adhesive systems according to the invention comprising hexamine as hardener agent show an optimised balance between effectiveness and cost, which render them particularly suitable for the industrial manufacture of MDF boards.

Other preferred hardener agents which also provide good results in bonding quality are tris(hydroxymethyl)nitromethane, polyethyleneimine (PEI) or combinations thereof, as well as combinations of one or more of these catalysts with hexamine.

Thus, in some particular embodiments of the invention, the hardener agent may be tris(hydroxymethyl)nitromethane, since this compound in combination with the polyflavonoid-based adhesive composition described in this document is able to provide MDF boards that at least comply with the requirements for structural board for use in dry conditions (MDF.LA) according to UNE-EN 622-5: 2010, and preferably also comply with the requirements for structural board for use in humid conditions (MDF.HLS) according to UNE-EN-622.5: 2010. As previously mentioned, this hardener agent may be combined with hexamine to obtain the required bonding quality, while reducing the cost.

Some hardener agents (component B) such as polyethyleneimine, tris(hydroxymethyl)nitromethane or silica, can be directly mixed with the adhesive composition according to the current invention to obtain the adhesive mixture to be applied on the wood chips or particles. In some alternative embodiments, component B is a hardening composition comprising the at least one hardener agent and water. For example, component B may be commercially available water solutions comprising at least one hardener agent such as a 40 wt.% glyoxal water solution or a 50 wt.% tris(hydroxymethyl)nitromethane water solution.

In some particular embodiments, the adhesive system according to the present invention may comprise, isolated one of another:
- Component A: the adhesive composition comprising at least one vegetable extract comprising polyflavonoids polymers as described in this document, and
- Component B: the hardening composition comprising: 2 to 12 parts by weight of hexamine, wherein the hexamine is comprised in an aqueous solution with a concentration between 30 wt.% and 42 wt.%; and
the amount of hexamine is expressed with respect to 100 parts by weight of solid content of the vegetable extract present in the adhesive composition (component A).

The hardening composition as described in this document can be obtained gradually adding a hardener agent, preferably hexamine, to water at a temperature from 15°C to 25°C, maintaining an agitation speed preferably higher than 150rpm by using a high shear dispenser until reaching dissolution.

The instant invention also refers to an adhesive mixture comprising component A and component B as described in this document.

Further object of the present invention is the use of the adhesive composition, the adhesive system or the adhesive mixture disclosed in this document for manufacturing wood composite boards, preferably fibreboards, particleboards, chipboards, plywood, paperboards or oriented strand board; or fibreglass insulations or rock wool insulations.

All the adhesive composition, the adhesive system and the adhesive mixture of the invention may be used to increase the hydrophobicity of hydrophilic materials. They may be used, for example, in the manufacture of wood derived boards, fibreboards, particleboards, chipboards, oriented strand boards, fibreglass or rock wool insulations, or combinations thereof.

In some embodiments, the present invention refers to the use of the adhesive composition according to the invention, wherein it comprises:
- 28 wt.% to 49 wt.% of at least one vegetable extract comprising polyflavonoids,
- 0.04 wt.% to 0.5 wt.% of at least one surfactant selected from anionic and non-ionic surfactants, the surfactant being added as such or obtained in situ by addition of a base, preferably between 0.02 wt.% to 0.3 wt.% of ethanolamine,
- 0.6 wt. % to 7.2 wt.% of hydrogenated or partially hydrogenated palm oil,
- 0.06 wt. % to 0.8 wt.% of soy oil,
- 0 to 9 wt.% of a viscosity reducing agent preferably selected from glycol, triacetin and a combination thereof; and
- 45 wt.% to 65 wt.% of water;
wherein all amounts are expressed by weight in respect to the total weight of the adhesive composition, and the sum of these amounts is equal to or lower than 100 %;
wherein the viscosity of the adhesive composition is preferably from 10 cP to 1000 cP, more preferably from 20 cP to 600 cP, and even more preferably from 20 cP to 300 cP, measured using a Rheometer DHR-2 (TA Instruments), with a geometry Peltier-plate, so that the apparent viscosity is measured when the stationary regime is achieved in a flow test at 25°C and shear rate of 100 s-1;
or the adhesive system or the adhesive mixture described in this document, wherein component A is the adhesive composition above described, for manufacturing MDF boards (Medium Density Fibreboards).

When used in the manufacturing of MDF, components A and B of the adhesive system according to the invention can be mixed in the selected proportions to obtain an adhesive mixture, for example into a static mixer, and such adhesive mixture is applied to wood fibres. Preferably the manufacturing of MDF is carried out in a blow-line system, and the adhesive mixture of components A and B is introduced in the blow-line after preparation.

In particular, when the adhesive composition of the invention is used for MDF manufacturing using the blow-line, the adhesive composition can be applied directly on the blow-line and, optionally, a small amount could be added as lubricant to the refiner's disk in order to maintain energetic savings.

In some other embodiments, the present invention refers to the use of the adhesive composition according to the invention, wherein it comprises:
- 30 wt.% to 51 wt.% of at least one vegetable extract comprising polyflavonoids,
- 0.04 wt.% to 0.5 wt.% of at least one surfactant selected from anionic and non-ionic surfactants, the surfactant being added as such or obtained in situ by addition of a base, preferably between 0.02 wt.% to 0.3 wt.% of ethanolamine,
- 0.6 wt. % to 7.4 wt.% of hydrogenated or partially hydrogenated palm oil,
- 0.06 wt. % to 0.8 wt.% of soy oil,
- 2 to 17 wt.% of a viscosity reducing agent preferably selected from glycol, triacetin and a combination thereof; and
- 32 wt.% to 56 wt.% of water;
wherein all amounts are expressed by weight in respect to the total weight of the adhesive composition, and the sum of these amounts is equal to or lower than 100 %;
wherein the viscosity of the adhesive composition is preferably from 10 cP to 1000 cP, more preferably from 20 cP to 600 cP, and even more preferably from 50 cP to 400 cP, measured using a Rheometer DHR-2 (TA Instruments), with a geometry Peltier-plate, so that the apparent viscosity is measured when the stationary regime is achieved in a flow test at 25°C and shear rate of 100 s-1;
or the adhesive system or the adhesive mixture described in this document, wherein component A is the adhesive composition above described, for manufacturing particleboards.

When used in the manufacturing of particleboards, components A and B of the adhesive system according to the invention can be mixed in the selected proportions to obtain an adhesive mixture, for example into a static mixer, and optionally pumped into a second mixer where further additives might be incorporated such as colorants, additional hydrophobic agent, or a combination thereof. Then, the adhesive mixture is injected in the blenders.

The present invention also refers to the wood composite boards comprising lignocellulosic fibres adhered by the adhesive mixture of the invention, wherein such wood composite boards are preferably fibreboards, particleboards, chipboards, plywood, paperboards or oriented strand board. Besides that, this specification also refers to fibreglass insulations or rock wool insulations comprising, respectively, fibreglass or rock wool particles adhered by the adhesive mixture of components A and B according to the invention.

In particular embodiments of this invention, said wood composite boards are MDF boards which at least comply with the requirements for structural board for use in dry conditions (MDF.LA) according to UNE-EN 622-5: 2010. Depending on the bio-based adhesive, the hardener agent and, preferably, the manufacturing working conditions, said MDF boards also comply with the requirements for structural board for use in humid conditions (MDF.HLS) according to UNE-EN-622.5: 2010 (see Table 4 below).

In other particular embodiments of this invention, said wood composite boards are particleboards which at least comply with the requirements for category P1, P2 or P4 according to UNE-EN-312: 2010. Depending on the bio-based adhesive, the hardener agent and, preferably, the amount of adhesive mixture, percentage of wood in the surface layer and the core layer and the manufacturing working conditions, said particleboards can also comply with the requirements for category P3, P5, P6 or P7 according to UNE-EN-312: 2010.

The present invention also refers to wood composition boards such as fibreboards, particleboards, chipboards, plywood, paperboards or oriented strand board; as well as fibreglass insulations or rock wool insulations obtained or obtainable by a manufacturing process wherein the adhesive composition, adhesive system or adhesive mixture according to the invention is used. The process for manufacturing such wood composite boards, fibreglass insulations or rock wool insulations may correspond to a process typically used in the art, with the exception that an adhesive mixture comprising a polyflavonoid-based resin as described herein is applied to the lignocellulosic fibres, the fibreglass or the rock wool particles.

According to particular embodiments of the invention, the wood composite board obtained or obtainable by this manufacturing process is a MFD board which at least complies with the requirements for structural board for use in dry conditions (MDF.LA) according to UNE-EN 622-5: 2010, and depending on the bio-based adhesive, the hardener agent and, preferably, the manufacturing working conditions, said MDF board also complies with the requirements for structural board for use in humid conditions (MDF.HLS) according to UNE-EN-622.5: 2010. In particular, adhesive compositions (component A) comprising pecan nut pith extract or pine bark extract, and hexamine as hardener agent (in component B) may provide MDF boards fulfilling requirements for structural board for use in humid conditions (MDF.HLS) according to UNE-EN-622.5: 2010 (see Table 3 below).

According to other particular embodiments of the invention, the wood composite board obtained or obtainable by this manufacturing process is a particleboard which at least complies with the requirements for category P1, P2 or P4 according to UNE-EN-312: 2010. Depending on the bio-based adhesive, the hardener agent and, preferably, the amount of adhesive mixture, percentage of wood in the surface layer and the core layer and the manufacturing working conditions, said particleboard can also comply with the requirements for category P3, P5, P6 or P7 according to UNE-EN-312: 2010.

### EXAMPLES

In the following, the invention will be further illustrated by means of Examples and Comparative Examples. The Examples should in no case be interpreted as limiting the scope of the invention, but only as an illustration of the invention.

### EXAMPLE 1. MDF PILOT PLANT PREPARATION USING AN ADHESIVE MIXTURE COMPRISING PINE BARK EXTRACT

Monolayer MDF were prepared in a pilot scale plant using the pine polyflavonoid-based adhesive composition of Table 1, and formulations (i.e., the adhesive mixtures of components A and B) of Table 2. In Table 1, DEG means diethylene glycol, the amount of vegetable oils is the sum of hydrogenate palm wax having an iodine value higher that 10 gr I₂/100 gr and soy oil, and additives is the sum of other compounds present in the adhesive composition of the invention, in particular, the sum of anionic surfactant obtained in situ by reaction of long chain fatty acids and diethanolamine, and non-ionic surfactant (i.e.: secondary alcohol ethoxylated). Each of the adhesive composition of Table 1 was used to obtain the formulation (i.e., adhesive mixture) of the same number in Table 2.

The pine extract used in the adhesive composition is a product prepared in FORESA. Pilot plant adhesives and Industrial adhesive in Table 1 were obtained by the same procedure but in different scales (pilot-plant or industrial). Thus, pine extract used in this example has a Stiasny number from 75 to 95 (measured according to the method previously disclosed in this document), a pH (36% w/w water solution) from 6 to 8, a viscosity (36% w/w water solution at 25°C and shear rate 100 s-1) from 250 cP to 800 cP, reactivity/gel time (36% w/w water solution with 6.5% w/w hexamine powder at 100°C) from 60 to 100 s, reactivity/gel time (36% w/w water solution with 12% w/w tris(hydroxymethyl)nitromethane powder) from 50 to 70 s, and density (25°C) from 1.15 to 1.25.

As an example, the preparation of the adhesive composition 1 and the 40% hexamine solution used to prepare the adhesive mixture corresponding to formulation 1 (Boards 1 / 2 of table 2) is described below.

### Component A (adhesive composition 1, see Table 1)

0.15 g of long chain fatty acid and 0.15 g of diethanolamine were added to 6.5 g of water at a temperature of about 70 °C, and the aqueous mixture was stirred to obtain the ionic surfactant in situ by reaction with fatty acids. Subsequently, 4.2 g of melted hydrogenated palm wax having an iodine value higher that 10 gr I₂/100 gr, 0.5 g of soy oil and 0.10 g of the non-ionic surfactant, in particular a secondary alcohol ethoxylate, were gradually and sequentially added to the mixture while stirring and maintaining the temperature at about 70°C. After that, the heated mixture obtained was slowly cooled until reaching a temperature of 20-25°C. Then, 250 g of an aqueous solution comprising 40 wt.% of pine extract, previously prepared by dissolving 100 g of pine extract in solid form into 150 g of water, was added to the mixture and it was stirred until homogenization. Finally, 20 g of diethylene glycol (DEG) were added and the mixture was stirred to obtain a uniform adhesive composition ready to be stored until use.

### Component B (40 wt.% hexamine solution)

A single preparation was made of 200 g of 40 wt.% hexamine solution, which was mixed with the 10 adhesive compositions of the invention according to the amounts established in Table 2. For the preparation of this solution, a small disperser with high shear was used in order to maintain agitation throughout the process at a temperature from 20°C to 25°C. In these conditions, 80 g of hexamine were gradually added to 120 g of water and the mixture was stirred until the hardening composition was obtained. Thus, 16,3 g of the 40 wt.% hexamine water solution (component B) comprised 6.52 g of hexamine and 9.78 g of water.

All compositions prepared were duly identified, packed and storage for 2 weeks at a temperature from 20°C to 25°C before being use for manufacturing MDF boards. After that time, the viscosity of the adhesive compositions (component A) was measured at 25°C and shear rate of 100 s⁻¹ in a Peltier-plate Rheometer DHR-2 of TA Instruments, and none of the viscosities values were higher than 1000 cP.

Different to adhesive compositions comprising conventional paraffin emulsions, or even a mixture of paraffin emulsion and surfactants, where a clear irreversible phase separation can be visually observed after 1 day, the adhesive compositions according to the invention does not show several different phases after 2 weeks at a temperature from 20°C to 25°C, and (if required) the adhesive composition may be slightly stirred, for example by recirculation, to achieve homogenization.

The MDF pilot scale preparation conditions are described in Table 3, MDF requirements according to UNE-EN-622.5 are included in Table 4 and the results obtained in Table 5.

At the time of manufacturing the MDF boards, components A, B and, if required, water in order to adjust the moisture of glued fibres, were mixed using a small high shear disperser for 5-10min in order to obtain the corresponding adhesive mixture, also called formulation herein.

Pending on the MOE and MOR (not analysed), all MDF boards prepared with pine-based adhesives according to the current invention fulfilled the requirements for both structural board for use in dry and in humid conditions (MDF.LA and MDF.HLS) according to UNE-EN 622-5: 2010 (see Table 4 below); whereas those MDF boards prepared with pine-based adhesives but without the hydrophobic agents of the invention (boards 9/10) only fulfilled the requirements for structural board for use in dry conditions (MDF.LA).

Consequently, the presence of the specific hydrophobic agents according to the invention in the adhesive mixture is critical to reduce thickness swelling and to satisfy the Norm for structural board in humid conditions, in particular in the manufacturing process conditions described in this example, i.e., a press time of 12.5 s/mm and a press temperature 195°C.

**Table 1. Adhesives compositions of Example 1 (using Pine extract) and comparative adhesive compositions using a MUF resin (FORESA RES2061)**

| **ADHESIVE COMPOSITIONS** | **Parts by weight** | | | | | | | | | | | |
|---|---|---|---|---|---|---|---|---|---|---|---|---|
| | **1** | **2** | **3** | **4** | **5** | **6** | **7** | **8** | **9** | **10** | **11** | **12** |
| **PINE EXTRACT** | 100.0 | 100.0 | 144.0 | 144.0 | 100.0 | 0.0 | 100.0 | 100.0 | 144.0 | 144.0 | 0.0 | 100.0 |
| **WATER** | 156.5 | 156.5 | 222.5 | 222.5 | 150.0 | 6.5 | 184.5 | 184.5 | 241.5 | 241.5 | 6.5 | 180.5 |
| **DEG** | 20.0 | 0.0 | 20.0 | 0.0 | 20.0 | 0.0 | 0.0 | 0.0 | 20.0 | 20.0 | 0.0 | 10.0 |
| **VEGETABLE OILS** | 4.7 | 4.7 | 4.7 | 4.7 | 0.0 | 4.7 | 4.7 | 4.7 | 4.7 | 4.7 | 4.7 | 4.7 |
| **ADDITIVES** | 0.4 | 0.4 | 0.4 | 0.4 | 0.0 | 0.4 | 0.4 | 0.4 | 0.4 | 0.4 | 0.4 | 0.4 |
| **FORESA RES 2061 (65%)** | 0.0 | 0.0 | 0.0 | 0.0 | 0.0 | 153.8 | 0.0 | 0.0 | 0.0 | 0.0 | 153.8 | 0.0 |

**Table 2. Formulations of Example 1 for Pilot Scale MDF Manufacture**

| | **MDF BOARDS¹** | **1 / 2** | **3 / 4** | **5 / 6** | **7 / 8** | **9 / 10** | **11 / 12** | **13 / 14** | **15 / 16** | **17 / 18** | **19 / 20** | **21 / 22** | **23 / 24** |
|---|---|---|---|---|---|---|---|---|---|---|---|---|---|
| | **FORMULATIONS** | **1** | **2** | **3** | **4** | **5** | **6** | **7** | **8** | **9** | **10** | **11** | **12** |
| | | **Parts by weight** | | | | | | | | | | | |
| **Component A** | **Adhesive Compositions of the Invention** | 281.6 | 261.6 | 391.6 | 371.6 | 270.0 | 0.0 | 289.6 | 289.6 | 410.6 | 410.6 | 0.0 | 295.6 |
| | **Comparative Adhesive Compositions** | 0.0 | 0.0 | 0.0 | 0.0 | 0.0 | 165.4 | 0.0 | 0.0 | 0.0 | 0.0 | 165.4 | 0.0 |
| **Component B** | **40% HEXAMINE WATER SOLUTION** | 16.3 | 16.3 | 23.5 | 23.5 | 16.3 | 0.0 | 16.3 | 16.3 | 23.5 | 23.5 | 0.0 | 16.3 |
| | **FORESA CAT 3009 (60%)** | 0.0 | 0.0 | 0.0 | 0.0 | 0.0 | 16.7 | 0.0 | 0.0 | 0.0 | 0.0 | 16.7 | 0.0 |

| | | | | | | | | | | | | | |
|---|---|---|---|---|---|---|---|---|---|---|---|---|---|
| * Two MDF boards were prepared per each formulation (the amount of dry fibre was 1000g). | | | | | | | | | | | | | |

**Table 3. MDF pilot scale preparation conditions with Pine bark extract adhesive formulations**

| | | | | | | | | | **% Solids content** | | | | |
|---|---|---|---|---|---|---|---|---|---|---|---|---|---|
| | **BOARDS** | **ADHESIVE MIXTURE** | **Length (cm)** | **Width (cm)** | **Thickness (mm)** | **Board Density (kg/m³)** | **% dry Component A on dry fiber¹** | **% dry Component B on dry fiber²** | **Component A¹** | **Component B²** | **Glued fibers moisture content (%)** | **Press time (s/mm)** | **Press Temperature (°C)** |
| **PILOT PLANT ADHESIVES** | **1 / 2** | FORMULATION 1 | 22 | 22 | 16.7 | 750 | 12.5 | 0.65 | 44.4 | 40 | 22.0 | 12.5 | 195 |
| | **3 / 4** | FORMULATION 2 | 22 | 22 | 16.7 | 750 | 10.5 | 0.65 | 40.1 | 40 | 22.0 | 12.5 | 195 |
| | **5 / 6** | FORMULATION 3 | 22 | 22 | 16.7 | 750 | 16.9 | 0.94 | 43.1 | 40 | 22.0 | 12.5 | 195 |
| | **7 / 8** | FORMULATION 4 | 22 | 22 | 16.7 | 750 | 14.9 | 0.94 | 40.1 | 40 | 22.0 | 12.5 | 195 |
| | **9 / 10** | FORMULATION 5 | 22 | 22 | 16.7 | 750 | 12.5 | 0.65 | 44.4 | 40 | 22.0 | 12.5 | 195 |
| **INDUSTRIAL ADHESIVES** | **13 / 14** | FORMULATION 7 | 22 | 22 | 16.7 | 750 | 10.5 | 0.65 | 36.3 | 40 | 22.0 | 12.5 | 195 |
| | **15 / 16** | FORMULATION 8 | 22 | 22 | 16.7 | 750 | 10.5 | 0.65 | 36.3 | 40 | 22.0 | 12.5 | 195 |
| | **17/18** | FORMULATION 9 | 22 | 22 | 16.7 | 750 | 16.9 | 0.94 | 41.1 | 40 | 22.0 | 12.5 | 195 |
| | **19 / 20** | FORMULATION 10 | 22 | 22 | 16.7 | 750 | 16.9 | 0.94 | 41.1 | 40 | 22.0 | 12.5 | 195 |
| | **23 / 24** | FORMULATION 12 | 22 | 22 | 16.7 | 750 | 11.5 | 0.65 | 38.9 | 40 | 22.0 | 12.5 | 195 |
| **FORESA RES 2061** | **11 / 12** | FORMULATION 6 | 22 | 22 | 16.7 | 750 | 10.5 | 1.00 | 63.5 | 60 | 10.0 | 12.5 | 195 |
| | **21 / 22** | FORMULATION 11 | 22 | 22 | 16.7 | 750 | 10.5 | 1.00 | 63.5 | 60 | 10.0 | 12.5 | 195 |

**Table 4. MDF requirements according to UNE-EN 622-5: 2010**

| | | | | **MDF REQUIREMENTS (UNE-EN 622-5)** | | | | | |
|---|---|---|---|---|---|---|---|---|---|
| | | | | **Board thickness (12-19mm)** | | **Board thickness (19-30mm)** | | **Board thickness (30-45mm)** | |
| **Property** | | **Norm** | **Units** | **Structural board for use in dry conditions (MDF.LA)** | **Structural board for use in humid conditions (MDF.HLS)** | **Structural board for use in dry conditions (MDF.LA)** | **Structural board for use in humid conditions (MDF.HLS)** | **Structural board for use in dry conditions (MDF.LA)** | **Structural board for use in humid conditions (MDF.HLS)** |
| **IB dry¹** | | EN 319 | N/mm² | 0.60 | 0.75 | 0.60 | 0.75 | 0.60 | 0.70 |
| **% TS 24h²** | | EN 317 | % | 12.0 | 8.0 | 12.0 | 7.0 | 12.0 | 7.0 |
| **Modulus of Rupture (MOR)³** | | EN 310 | N/mm² | 25 | 30 | 23 | 28 | 21 | 21 |
| **Modulus of Elasticity (MOE)³** | | EN 310 | N/mm² | 2500 | 2700 | 2300 | 2600 | 2100 | 2400 |
| **Option 1** | **% TS V-313⁴** | EN 317 / EN 321 | % | n/a | 15 | n/a | 15 | n/a | 15 |
| | **IB V-313⁴** | EN 319 / EN 321 | N/mm² | n/a | 0.20 | n/a | 0.15 | n/a | 0.10 |
| **Option 2** | **IB V-100⁵** | EN 319 / EN 1087-1 | N/mm² | n/a | 0.12 | n/a | 0.12 | n/a | 0.10 |

| | | | | | | | | | |
|---|---|---|---|---|---|---|---|---|---|
| ¹Internal Bond according to EN 319; ² Thickness swelling % after 24h of water immersion at 20°C according to EN 317; ³ Modulus of Rupture and Elasticity according to EN 310; ⁴ Thickness swelling % and internal bond after 3 water immersion-freezing-drying cycles (EN 321); ⁵ Internal bond after a boil-dry cycle (EN 1087-1) | | | | | | | | | |

**Table 5. MDF pilot plant resuls with Pine bark extract adhesive formulations**

| | **BOARDS Thickness (mm)** | | **Density (Kg/m³)** | | **IB dry¹ (N/mm²)** | | **%TS 24h²** | | **IB V100³ (N/mm²)** | | **IB V-313⁴ (N/mm²)** | | **% TS V-313⁴** | |
|---|---|---|---|---|---|---|---|---|---|---|---|---|---|---|
| | | | **Mean** | **Stdv** | **Mean** | **Stdv** | **Mean** | **Stdv** | **Mean** | **Stdv** | **Mean** | **Stdv** | **Mean** | **Stdv** |
| **PILOT PLANT ADHESIVES** | 1 / 2 | 16 | 812 | 20 | 0.95 | 0.11 | 7.9 | 0.2 | 0.30 | 0.07 | 0.36 | 0.07 | 6.8 | 0.2 |
| | 3 / 4 | 16 | 825 | 17 | 1.10 | 0.09 | 7.8 | 0.2 | 0.28 | 0.07 | 0.30 | 0.05 | 9.7 | 0.8 |
| | 5 / 6 | 16 | 805 | 26 | 1.03 | 0.20 | 7.6 | 0.1 | 0.57 | 0.06 | 0.59 | 0.07 | 5.1 | 0.7 |
| | 7 / 8 | 16 | 813 | 21 | 1.14 | 0.24 | 7.5 | 0.5 | 0.29 | 0.04 | 0.29 | 0.05 | 8.9 | 1.0 |
| | 9 / 10 | 16 | 796 | 26 | 0.98 | 0.14 | 11.5 | 0.4 | 0.21 | 0.02 | 0.25 | 0.04 | 11.1 | 0.9 |
| **INDUSTRIAL ADHESIVES** | 13 / 14 | 16 | 772 | 29 | 0.83 | 0.07 | 7.6 | 0.1 | 0.21 | 0.02 | 0.25 | 0.02 | 9.9 | 1.1 |
| | 15 / 16 | 16 | 790 | 26 | 0.82 | 0.02 | 7.8 | 0.2 | 0.20 | 0.02 | 0.24 | 0.01 | 10.5 | 0.5 |
| | 17 / 18 | 16 | 800 | 34 | 0.80 | 0.03 | 7.9 | 0.1 | 0.17 | 0.01 | 0.25 | 0.02 | 11.3 | 1.8 |
| | 19 / 20 | 16 | 801 | 22 | 0.80 | 0.04 | 7.9 | 0.2 | 0.18 | 0.01 | 0.23 | 0.03 | 11.4 | 2.1 |
| | 23 / 24 | 16 | 782 | 34 | 0.81 | 0.03 | 7.8 | 0.1 | 0.19 | 0.01 | 0.23 | 0.03 | 12.2 | 1.0 |
| **FORESA RES 2061** | 11 / 12 | 16 | 758 | 17 | 0.83 | 0.11 | 8.3 | 0.2 | 0.04 | 0.01 | 0.20 | 0.05 | 17.1 | 0.3 |
| | 21 / 22 | 16 | 764 | 35 | 0.82 | 0.03 | 8.4 | 0.2 | 0.05 | 0.00 | 0.13 | 0.03 | 22.1 | 0.8 |

| | | | | | | | | | | | | | | |
|---|---|---|---|---|---|---|---|---|---|---|---|---|---|---|
| ¹ Internal Bond according to EN 319; ² Thickness swelling % according to EN 317; ³ Internal bond after a boil-dry cycle (EN 1087-1); ⁴ Internal bond and thickness swelling % after a water immersion-freezing-drying cycle (EN 321). Two boards per formulation were prepared. The results show the mean and standard deviation of 10 individual samples | | | | | | | | | | | | | | |

### EXAMPLE 2. MDF PILOT PLANT PREPARATION USING AN ADHESIVE MIXTURE COMPRISING MIMOSA BARK EXTRACT

Monolayer MDF were prepared in a pilot scale plant using the mimosa polyflavonoid-based adhesive compositions of Table 6, and formulations (the adhesive mixture of components A and B) of Table 7. In Table 6, the amount of vegetable oils is the sum of hydrogenate palm wax having an iodine value higher that 10 gr I₂/100 gr and soy oil, and additives is the sum of other compounds present in the adhesive composition of the invention, in particular, the sum of anionic surfactant obtained in situ by reaction of long chain fatty acids and diethanolamine, and non-ionic surfactant (i.e.: secondary alcohol ethoxylated). Each of the adhesive composition of Table 6 was used to obtain the formulation (i.e., adhesive mixture) of the same number in Table 7.

The mimosa extract used in these compositions was a solid powder with a moisture of 6%, polyphenolic (flavonoid) content of 68%, a pH (10% w/w solution) of 7.0, a viscosity (50% w/w solution at 25°C) of 600 cP, reactivity/gel time (50% w/w solution with 10% Chemanol Paraformaldehyde powder at 100°C) 90 sec, and reactivity/gel time (50% w/w solution with 8% w/w hexamine powder at 100°C) 150 sec.

**Table 6. Adhesives compositions of Example 2**

| **ADHESIVE COMPOSITIONS** | **Parts by weight** | | | | | | | | |
|---|---|---|---|---|---|---|---|---|---|
| | **1** | **2** | **3** | **4** | **5** | **6** | **7** | **8** | **9** |
| **MIMOSA EXTRACT** | 150.0 | 150.0 | 150.0 | 150.0 | 150.0 | 150.0 | 0.0 | 0.0 | 0.0 |
| **WATER** | 156.5 | 150.0 | 163.1 | 150.0 | 171.1 | 150.0 | 0.0 | 0.0 | 0.0 |
| **VEGETABLE OILS** | 4.7 | 0.0 | 9.3 | 0.0 | 15.0 | 0.0 | 0.0 | 0.0 | 0.0 |
| **ADDITIVES** | 0.4 | 0.0 | 0.9 | 0.0 | 1.4 | 0.0 | 0.0 | 0.0 | 0.0 |
| | | | | | | | | | |
| **FORESA RES 1350 (64%)** | 0.0 | 0.0 | 0.0 | 0.0 | 0.0 | 0.0 | 156.3 | 156.3 | 156.3 |
| **FORESA WAX 2102 (60%)** | 0.0 | 8.3 | 0.0 | 16.7 | 0.0 | 25.0 | 8.3 | 16.7 | 25.0 |

In Table 6, adhesive compositions 1, 3 and 5 are according to the invention comprising mimosa extract, whereas compositions 2, 4 and 6 are comparative compositions using a different adhesive resin (in particular, the UF resin FORESA RES1350) and/or a different hydrophobic agent (in particular the paraffin wax FORESA WAX 2102), and compositions 7-9 are control compositions.

**Table 7. Formulations of Example 2 for Pilot Scale MDF (using Mimosa extract) and comparative adhesive formulations**

| | **MDF BOARDS ¹** | **1 / 2** | **3 / 4** | **5 / 6** | **7 / 8** | **9 / 10** | **11 / 12** | **13 / 14** | **15 / 16** | **17 / 18** |
|---|---|---|---|---|---|---|---|---|---|---|
| | **FORMULATIONS** | **1** | **2** | **3** | **4** | **5** | **6** | **7** | **8** | 9 |
| | | **Parts by weight** | | | | | | | | |
| **Component A** | **Adhesive Compositions of the Invention** | 311.6 | 0.0 | 323.3 | 0.0 | 337.5 | 0.0 | 0.0 | 0.0 | 0.0 |
| | **Com parative Adhesive Compositions** | 0.0 | 308.3 | 0.0 | 316.7 | 0.0 | 325.0 | 164.6 | 173.0 | 181.3 |
| **Component B** | **40% HEXAMINE WATER SOLUTION** | 30.0 | 30.0 | 30.0 | 30.0 | 30.0 | 30.0 | 0.0 | 0.0 | 0.0 |
| | **FORESA CAT 3009 (60%)** | 0.0 | 0.0 | 0.0 | 0.0 | 0.0 | 0.0 | 8.3 | 8.3 | 8.3 |

| | | | | | | | | | | |
|---|---|---|---|---|---|---|---|---|---|---|
| ¹ Two MDF boards were prepared per each formulation (the needed amount of dry fibre was 1000g). | | | | | | | | | | |

As an example, the preparation of the adhesive mixture corresponding to formulation 1 (Boards 1/2) is described below.

### Component A

0.15 g of long chain fatty acid and 0.15 g of diethanolamine were added to 6.5 g of water at a temperature of about 70 °C, and the aqueous mixture was stirred to obtain the ionic surfactant in situ by reaction with fatty acids. Subsequently, 4.2 g of melted hydrogenated palm wax having an iodine value higher that 10 gr I₂/100 gr, 0.5 g of soy oil and 0.10 g of the non-ionic surfactant, in particular a secondary alcohol ethoxylate, were gradually and sequentially added to the mixture while stirring and maintaining the temperature at about 70°C. After that, the heated mixture obtained was slowly cooled until reaching a temperature of 20-25°C. Then, 300 g of an aqueous solution comprising 50 wt.% of mimosa extract, previously prepared by dissolving 150 g of mimosa extract in solid form into 150 g of water, was added to the mixture and it was stirred until homogenization to obtain a uniform adhesive composition ready to be stored until use.

### Component B (40 wt.% hexamine solution)

A single preparation was made of 200 g of homogenous 40% hexamine solution, which was mixed with the 6 polyflavonoids-containing adhesive composition according to the amounts of Table 7. For the preparation of this solution, a small disperser with high shear was used to maintain agitation throughout the process at a temperature from 20°C to 25°C. In these conditions, 80 g of hexamine were gradually added to 120 g of water and the mixture was stirred until the hardening composition was obtained.

All compositions prepared (components A and B) were duly identified, packed and storage for 2 weeks at a temperature from 20°C to 25°C before being use in the manufacturing of MDF boards. After that time, the viscosity of the adhesive compositions was measured at 25°C and shear rate of 100 s⁻¹ in a Peltier-plate Rheometer DHR-2 of TA Instruments, and none of the viscosities values were higher than 1000 cP.

At the time of manufacturing the MDF boards, components A, B and, if required, water in order to adjust the moisture of glued fibres, were mixed using a small high shear disperser for 5-10min.

The MDF pilot scale preparation conditions are described in Table 8 and the results obtained in Table 9 (see below).

Pending on the MOE and MOR (not analysed), all MDF boards prepared with mimosa bark extract adhesives fulfilled the requirements for structural board for use in dry conditions (MDF.LA) according to UNE-EN 622-5 (see Table 4 above), but adhesive compositions and mixtures according to the invention result in a higher Internal bond and lower thickness swelling compared to the control boards 3/4, 7/8 and 11/12, prepared using a comparative composition comprising a synthetic wax (paraffin emulsion FORESA WAX 2102) as hydrophobic agent.

**Table 8. MDF pilot scale preparation conditions with Adhesive Formulations of Example 2**

| | | | | | | | | **% Solids content** | | | | |
|---|---|---|---|---|---|---|---|---|---|---|---|---|
| **BOARDS** | **ADHESIVE MIXTURE** | **Length (cm)** | **Width (cm)** | **Thickness (mm)** | **Board Density (kg/m³)** | **% dry Component A on dry fiber** | **% dry Component B on dry fiber** | **Component A ¹** | **Component B ²** | **Glued fibers moisture content (%)** | **Press time (s/mm)** | **Press Temperature (°C)** |
| **1 / 2** | FORMULATION 1 | 22 | 22 | 16.7 | 750 | 15.5 | 1.2 | 49.7 | 40.0 | 16.7 | 12.5 | 195 |
| **3 / 4** | FORMULATION 2 | 22 | 22 | 16.7 | 750 | 15.5 | 1.2 | 50.3 | 40.0 | 16.7 | 12.5 | 195 |
| **5 / 6** | FORMULATION 3 | 22 | 22 | 16.7 | 750 | 16.0 | 1.2 | 49.5 | 40.0 | 16.7 | 12.5 | 195 |
| **7 / 8** | FORMULATION 4 | 22 | 22 | 16.7 | 750 | 16.0 | 1.2 | 50.5 | 40.0 | 16.7 | 12.5 | 195 |
| **9 / 10** | FORMULATION 5 | 22 | 22 | 16.7 | 750 | 16.5 | 1.2 | 49.2 | 40.0 | 16.7 | 12.5 | 195 |
| **11 / 12** | FORMULATION 6 | 22 | 22 | 16.7 | 750 | 16.5 | 1.2 | 50.8 | 40.0 | 16.7 | 12.5 | 195 |
| **13 / 14** | FORMULATION 7 | 22 | 22 | 16.7 | 750 | 10.5 | 0.5 | 63.8 | 60.0 | 10.0 | 12.5 | 195 |
| **15 / 16** | FORMULATION 8 | 22 | 22 | 16.7 | 750 | 11.0 | 0.5 | 63.6 | 60.0 | 10.0 | 12.5 | 195 |
| **17 / 18** | FORMULATION 9 | 22 | 22 | 16.7 | 750 | 11.5 | 0.5 | 63.4 | 60.0 | 10.0 | 12.5 | 195 |

| | | | | | | | | | | | | |
|---|---|---|---|---|---|---|---|---|---|---|---|---|
| ¹ Component A for boards 13/14, 15/16 and 17/18 comprises a UF resin (FORESA RES 1350) and a synthetic was emulsion (parafin emulsion available as FORESA WAS 2102); ² Component B for boards 13/14, 15/16 and 17/18 comprises a control catalyst (FORESA CAT 3009) | | | | | | | | | | | | |

**Table 9. MDF pilot plant results with Adhesive Formulations of Example 2**

| | **BOARDS** | **Thickness (mm)** | **Density (Kg/m³)** | | **IB dry¹ (N/mm²)** | | **%TS 24h²** | |
|---|---|---|---|---|---|---|---|---|
| | | | **Mean** | **Stdv** | **Mean** | **Stdv** | **Mean** | **Stdv** |
| **PILOT PLANT MDF** | 1 / 2 | 16 | 737 | 20 | 0.71 | 0.11 | 9.8 | 0.2 |
| | 3 / 4 | 16 | 745 | 17 | 0.67 | 0.09 | 10.8 | 0.2 |
| | 5 / 6 | 16 | 752 | 26 | 0.73 | 0.10 | 8.5 | 0.1 |
| | 7 / 8 | 16 | 739 | 21 | 0.65 | 0.12 | 9.4 | 0.5 |
| | 9 / 10 | 16 | 760 | 26 | 0.72 | 0.14 | 7.4 | 0.4 |
| | 11 / 12 | 16 | 738 | 17 | 0.63 | 0.11 | 8.3 | 0.2 |
| | 13 / 14 | 16 | 754 | 22 | 0.72 | 0.04 | 10.4 | 0.2 |
| | 15 / 16 | 16 | 762 | 35 | 0.67 | 0.03 | 9.1 | 0.2 |
| | 17 / 18 | 16 | 741 | 34 | 0.62 | 0.03 | 7.6 | 0.1 |

| | | | | | | | | |
|---|---|---|---|---|---|---|---|---|
| ¹ Internal Bond according to EN 319; ² Thickness swelling % according to EN 317; Two boards per formulation were prepared. The results show the mean and standard deviation of 10 individual samples | | | | | | | | |

### EXAMPLE 3. PARTICLEBOARD PILOT PLANT PREPARATION USING A MIMOSA BARK ADHESIVE

Three-layer particleboard were prepared in a pilot scale plant using the mimosa polyflavonoid-based adhesive compositions of Table 10, and formulations (the adhesive mixture of components A and B) of Table 11. In Table 10, the amount of vegetable oils is the sum of hydrogenate palm wax having an iodine value higher that 10 gr I₂/100 gr and soy oil, and additives is the sum of other compounds present in the adhesive composition of the invention, in particular, the sum of anionic surfactant obtained in situ by reaction of long chain fatty acids and diethanolamine, and non-ionic surfactant (i.e.: secondary alcohol ethoxylated). Each of the adhesive composition of Table 10 was used to obtain the formulation (i.e., adhesive mixture) of the same number in Table 11.

The mimosa extract used in the formulations was the same as described in Example 2.

**Table 10. Adhesive compositions of Example 3 for Particle board**

| **ADHESIVE COMPOSITIONS** | **Parts by weight** | | | | | |
|---|---|---|---|---|---|---|
| | **1** | | **2** | | **3** | |
| | **Core Layer** | **Surface Layer** | **Core Layer** | **Surface Layer** | **Core Layer** | **Surface Layer** |
| **MIMOSA EXTRACT** | 79.0 | 41.6 | 78.6 | 41.3 | 78.4 | 41.2 |
| **WATER** | 56.8 | 29.9 | 60.6 | 31.8 | 64.5 | 34.0 |
| **DEG** | 15.8 | 8.3 | 15.8 | 8.3 | 15.6 | 8.2 |
| **VEGETABLE OILS** | 3.0 | 1.6 | 5.8 | 3.1 | 8.7 | 4.6 |
| **ADDITIVES** | 0.3 | 0.1 | 0.6 | 0.3 | 0.8 | 0.4 |

**Table 11. Formulations of Example 3 for Pilot Scale Particle board**

| | **MDF BOARDS¹** | **1 / 2** | | **3 / 4** | | **5 / 6** | |
|---|---|---|---|---|---|---|---|
| | **FORMULA TIONS** | **1 Core Layer** | **1 Surface Layer** | **2 Core Layer** | **2 Surface Layer** | **3 Core Layer** | **3 Surface Layer** |
| | | **Parts by weight** | | | | | |
| **Component A** | **Adhesive Compositions of the Invention** | 154.8 | 81.5 | 161.4 | 84.8 | 168.0 | 88.4 |
| **Component B** | **40% Hexamine Water Solution** | 15.8 | 6.7 | 15.8 | 6.7 | 15.6 | 6.7 |

| | | | | | | | |
|---|---|---|---|---|---|---|---|
| ¹ Two particleboards were prepared per each formulation. The amount of dry particles to prepare two boards was 1190g, where 65% by weight of the dried particles were used for the core layer and 35% by weight of the dried particles were used for the surface layer. | | | | | | | |

As an example, the preparation of the adhesive mixture corresponding to formulation 1 is described below.

### Component A for the core layer

0.11 g of long chain fatty acid and 0.11 g of diethanolamine were added to 4.2 g of water at a temperature of about 70 °C, and the aqueous mixture was stirred to obtain the ionic surfactant in situ by reaction with fatty acids. Subsequently, 2.7 g of melted hydrogenated palm wax having an iodine value higher that 10 gr I₂/100 gr, 0.3 g of soy oil and 0.08 g of the non-ionic surfactant, in particular a secondary alcohol ethoxylate, were gradually and sequentially added to the mixture while stirring and maintaining the temperature at about 70°C. After that, the heated mixture obtained was slowly cooled until reaching a temperature of 20-25°C. Then, 131.6 g of an aqueous solution comprising 60 wt.% of mimosa extract, previously prepared by dissolving 79 g of mimosa extract in solid form into 53 g of water, was added to the mixture and it was stirred until homogenization. Finally, 15.8 g of diethylene glycol (DEG) were added and the mixture was stirred to obtain a uniform adhesive composition ready to be stored until use.

### Component B (40 wt.% hexamine solution)

A single preparation was made of 100 g of homogenous 40 wt. % hexamine solution, which was mixed with the 6 polyflavonoid-containing adhesive composition (3 formulations x 2 layers) according to the amounts established in Table 11. For the preparation of this solution, a small disperser with high shear was used in order to maintain agitation throughout the process at a temperature from 20°C to 25°C. In these conditions, 40 g of hexamine were gradually added to 60 g of water and the mixture was stirred until the hardening composition was obtained.

All compositions prepared (components A and B) were duly identified, packed and storage for 2 weeks at a temperature from 20°C to 25°C before being use in the manufacturing of particleboards. After that time, the viscosity of these adhesive compositions was measured at 25°C and shear rate of 100 s⁻¹ in a Peltier-plate Rheometer DHR-2 of TA Instruments, and none of the viscosities values were higher than 1000 cP.

The particleboard pilot scale preparation conditions are described in Table 12, the particleboard requirements according to UNE-EN 312: 2010 in Table 13 and the results obtained in Table 14. Only the dry internal bond and the thickness swelling were analysed.

At the time of manufacturing the particleboards, components A, B and, if required, water in order to adjust the moisture of glued fibres, were mixed using a small high shear disperser for 5min to 10min in order to obtain the corresponding adhesive mixture, also called formulation herein.

**Table 12. Particleboard pilot scale preparation conditions with adhesive formulations of Example 3**

| | | | | | | | | | | **% Solids content** | | | | | | | |
|---|---|---|---|---|---|---|---|---|---|---|---|---|---|---|---|---|---|
| | | | | | | **Core Layer** | | **Surface Layer** | | **Core layer** | | **Surface layer** | | **Glued fibers moisture content (%)** | | | |
| **BOARDS** | **Formulation** | **Length (cm)** | **Width (cm)** | **Thickness (mm)** | **Board Density (kg/m³)** | **% dry Component A on dry fiber** | **%dry Component B on dry fiber** | **%dry Component A on dry fiber** | **%dry Component B on dryfiber** | **Component A** | **Component B** | **Component A** | **Component B** | **Core layer** | **Surface layer** | **Press time (s/mm)** | **Press Temperature (°C)** |
| 1/2 | 1 | 23.7 | 23.7 | 16.0 | 650 | 15.5 | 1.0 | 15.5 | 0.81 | 63.3 | 40.0 | 63.3 | 40.0 | 15.8 | 15.8 | 12.50 | 195 |
| 3/4 | 2 | 23.7 | 23.7 | 16.0 | 650 | 16.0 | 1.0 | 16.0 | 0.81 | 62.4 | 40.0 | 62.4 | 40.0 | 15.8 | 15.8 | 12.50 | 195 |
| 5/6 | 3 | 23.7 | 23.7 | 16.0 | 650 | 16.5 | 1.0 | 16.5 | 0.81 | 61.5 | 40.0 | 61.5 | 40.0 | 15.8 | 15.8 | 12.50 | 195 |

**Table 13. Particleboard requirements according to UNE-EN 312:2010**

| | | | | **PARTICLEBOARD REQUIREMENTS (UNE-EN 312)** | | | | | | |
|---|---|---|---|---|---|---|---|---|---|---|
| | | | | **Board thickness (13-20mm)** | | | | | | |
| **Property** | | **Norm** | **Units** | **Type P1** | **Type P2** | **Type P3** | **Type P4** | **Type P5** | **Type P6** | **Type P7** |
| **IB dry¹** | | EN 319 | N/mm² | 0.24 | 0.35 | 0.45 | 0.35 | 0.45 | 0.50 | 0.70 |
| **% TS 24h²** | | EN 317 | % | n/a | n/a | 14.0 | 15.0 | 10.0 | 15.0 | 10.0 |
| **Modulus of Rupture (MOR)³** | | EN 310 | N/mm² | 10 | 11 | 14 | 15 | 16 | 18 | 20 |
| **Modulus of Elasticity (MOE)³** | | EN 310 | N/mm² | n/a | 1600 | 1950 | 2300 | 2400 | 3000 | 3100 |
| **Surface Soundness (SS)⁴** | | EN 311 | N/mm² | n/a | 0.8 | n/a | n/a | n/a | n/a | n/a |
| **Option 1** | **% TS V-313⁵** | EN 317/ EN 321 | % | n/a | n/a | 13.0 | n/a | 12.0 | n/a | 11.0 |
| | **IB V-313⁵** | EN 319 / EN 321 | N/mm² | n/a | n/a | 0.13 | n/a | 0.22 | n/a | 0.36 |
| **Option 2** | **IB V-100⁶** | EN 319 / EN 1087-1 | N/mm² | n/a | n/a | 0.08 | n/a | 0.14 | n/a | 0.23 |

| | | | | | | | | | | |
|---|---|---|---|---|---|---|---|---|---|---|
| ¹ Internal Bond according to EN 319; ² Thickness swelling % after 24h of water immersion at 20°C according to EN 317; ³ Modulus of Rupture and Elasticity according to EN 310; ⁴ Surface soundness according to EN 311:2002; ⁵ Thickness swelling % and internal bond after 3 water immersion-freezing-drying cycles (EN 321); Internal bond after a boil-dry cycle (EN 1087-1) | | | | | | | | | | |

**Table 14. Particleboard pilot plant results with Adhesive Formulations of Example 3**

| **BOARDS** | **Thickness (mm)** | **Density (Kg/m³)** | | **IB dry¹ (N/mm²)** | | **%TS 24h²** | |
|---|---|---|---|---|---|---|---|
| | | **Mean** | **Stdv** | **Mean** | **Stdv** | **Mean** | **Stdv** |
| 1 / 2 | 16 | 645 | 11 | 0.71 | 0.08 | 14.2 | 0.02 |
| 3 / 4 | 16 | 651 | 13 | 0.68 | 0.09 | 12.1 | 0.03 |
| 5 / 6 | 16 | 648 | 9 | 0.69 | 0.07 | 9.8 | 0.02 |

| | | | | | | | |
|---|---|---|---|---|---|---|---|
| ¹ Internal Bond according to EN 319; ² Thickness swelling % according to EN 317; Two boards per formulation were prepared. The results show the mean and standard deviation of 10 individual samples | | | | | | | |

As it can be seen in Table 14, all boards show an average dry internal bond that would satisfy the requirements for type P1 to type P6 particleboards and even type P7 (IBdry higher than 0.70 N/mm²) for boards 1/2 made with formulation 1. On the other hand, the average thickness swelling ranged from 9.8% to 14.2% depending on the hydrophobic agent loading, which would be enough to satisfy the requirements for type P5 and P7 particleboards (TS lower than 10%) in boards 5/6 (Formulation 3), type P3 (TS lower than 14%) in boards 3/4 (Formulation 2), and type P4 and P6 (TS lower than 15%) in boards 1/2 (Formulation 1). Consequently, the results indicate that increasing amounts of the hydrophobic agents according to the invention significantly reduce the thickness swelling without negatively affecting the dry internal bond.

### EXAMPLE 4: Stability of adhesive compositions

With the aim to check the stability of adhesive compositions according to the invention, some compositions comprising a hydrophobic agent and, optionally, a viscosity reducing agent have been stored at 20 °C. The viscosity of these composition has been periodically measured at 25°C and shear rate of 100 s⁻¹ in a Peltier-plate Rheometer DHR-2 of TA Instruments.

Mimosa polyphenolic-based adhesive compositions prepared are described in Table 15, and results obtained are reported in Table 16. Ingredients of these composition are as described in Example 2 (see above).

**Table 15: Adhesive compositions according to the invention and comparative adhesive compositions for the stability study**

| **ADHESIVE COMPOSITIONS** | **Parts by weight** | | | | | | | | |
|---|---|---|---|---|---|---|---|---|---|
| | **1** | **2** | **3** | **4** | **5** | **6** | **7** | **8*** | **9*** |
| **MIMOSA EXTRACT** | 40.0 | 40.0 | 40.0 | 50.0 | 50.0 | 50.0 | 50.0 | 20.0 | 20.0 |
| **WATER** | 70.6 | 62.2 | 64.5 | 63.2 | 52.8 | 55.6 | 55.6 | 30.0 | 30.0 |
| **DEG** | 0.0 | 0.0 | 4.0 | 0.0 | 0.0 | 5.0 | 0.0 | 0.0 | 0.0 |
| **TRIACETIN** | 0.0 | 0.0 | 0.0 | 0.0 | 0.0 | 0.0 | 5.0 | 0.0 | 0.0 |
| **VEGETABLE OILS** | 7.5 | 1.6 | 3.2 | 9.4 | 2.0 | 4.0 | 4.0 | 0.0 | 0.0 |
| **ADDITIVES** | 0.7 | 0.2 | 0.3 | 0.9 | 0.2 | 0.4 | 0.4 | 0.0 | 0.0 |
| | | | | | | | | | |
| **FORESA WAX 2102 (60%) 2102 (60%)** | 0.0 | 0.0 | 0.0 | 0.0 | 0.0 | 0.0 | 0.0 | 4.0 | 0.0 |
| **FORESA WAX 2502 (60%)** | 0.0 | 0.0 | 0.0 | 0.0 | 0.0 | 0.0 | 0.0 | 0.0 | 9.9 |

**Table 16: Viscosity of adhesive compositions over time**

| | Period of storage (days) | | | | | |
|---|---|---|---|---|---|---|
| Viscosity of the composition (cP, 25°C, 100 ⁻¹) | 0 | 7 | 14 | 21 | 28 | 44 |
| 1 | 29 | 29 | 33 | 33 | 32 | 34 |
| 2 | 30 | 34 | 39 | 36 | 36 | 33 |
| 3 | 26 | 28 | 29 | 29 | 31 | 30 |
| 4 | 107 | 109 | 125 | 117 | 121 | 115 |
| 5 | 171 | 181 | 216 | 256 | 216 | 256 |
| 6 | 93 | 119 | 105 | 127 | 124 | 115 |
| 7 | 133 | 130 | 192 | 148 | 169 | 148 |

In comparative compositions 8 and 9, separated paraffin was observed on the surface of the composition only few hours after their preparation. Different to that, the adhesive compositions according to the invention (i.e., compositions 1 to 7) remained stable, so that no separation of phases was observed and viscosity remains far below 1000 cP.

Besides that, stability results obtained from some pine polyflavonoid-based adhesive compositions according to the invention are described in Table 17 below.

**Table 17: Adhesive compositions according to the invention (pine extract) for the stability study**

| **ADHESIVE COMPOSITIONS** | **Parts by weight** | | | |
|---|---|---|---|---|
| | **1** | **2** | **3** | **4** |
| **PINE EXTRACT** | 35.0 | 35.0 | 35.0 | 35.0 |
| **WATER** | 66.1 | 68.4 | 66.1 | 68.4 |
| **DEG** | 3.5 | 3.5 | 7.0 | 7.0 |
| **VEGETABLE OILS** | 0.8 | 2.4 | 0.8 | 2.4 |
| **ADDITIVES** | 0.1 | 0.2 | 0.1 | 0.2 |

**Table 18: Shelf life of adhesive compositions according to the invention (pine extract)**

| | | **Storage at 20°C** | |
|---|---|---|---|
| **ADHESIVE COMPOSITION** | **Days** | **Viscosity (mPa·s)¹** | **Stability² (days)** |
| 1 | 0 | 462 | 21 |
| | 8 | 631 | |
| | 17 | 821 | |
| | 30 | 1538 | |
| | 38 | 2255 | |
| | 44 | 3042 | |
| 2 | 0 | 344 | 35 |
| | 8 | 544 | |
| | 17 | 680 | |
| | 30 | 807 | |
| | 38 | 1289 | |
| | 44 | 1393 | |
| | 52 | 1415 | |
| | 66 | 3388 | |
| 3 | 0 | 274 | 35 |
| | 8 | 369 | |
| | 17 | 405 | |
| | 30 | 595 | |
| | 38 | 1118 | |
| | 44 | 1545 | |
| | 52 | 2251 | |
| | 59 | 2483 | |
| | 66 | 5768 | |
| 4 | 0 | 222 | 52 |
| | 8 | 283 | |
| | 17 | 340 | |
| | 30 | 439 | |
| | 38 | 692 | |
| | 44 | 744 | |
| | 52 | 977 | |
| | 59 | 1120 | |
| | 66 | 1563 | |

| | | | |
|---|---|---|---|
| ¹ Measured at 25°C and 100s ¹ of Shear rate in a DHR-2 Rheometer (TA Instruments) using Peltier-plate geometry. ² Stability is defined as the period of time until the adhesive reaches 1000 mPa·s at 100 ^{s-1}. | | | |

The pine extract used for the preparation of these adhesive compositions had a Stiasny number of 82.

None of these adhesive compositions showed phase separation during the test.

## Claims

1. An adhesive composition **characterized in that** it comprises:
- at least one bio-based adhesive,
- at least one surfactant selected from anionic and non-ionic surfactants,
- at least one vegetable oil, preferably selected from palm oil, soy oil and a combination thereof,
- optionally, a viscosity reducing agent preferably selected from glycol, triacetin and a combination thereof; and
- water.

2. The adhesive composition of claim 1, wherein the bio-based adhesive is selected from soy protein, chitosan, furanic resin, unsaturated oil-based resin, polyphenolic based polymer and a combination thereof, preferably the polyphenolic-based polymer is selected from lignin, polyflavonoids and a combination thereof.

3. The adhesive composition of claim 2, comprising at least one vegetable extract comprising polyflavonoids, wherein said vegetable extract is preferably selected from mimosa bark extract, quebracho wood extract, hemlock bark extract, sumach bark extract, pine bark extract, pecan nut pith extract, Douglas fir bark extract and a combination thereof, preferably it is selected from mimosa bark extract, pecan nut pith extract, pine bark extract and a combination thereof.

4. The adhesive composition of any one of claims 3, wherein the Stiasny number of the vegetable extract is higher than 65%, preferably equal to or higher than 75%.

5. The adhesive composition of any one of claims 1 to 4, wherein the glycol is a compound of formula HOCH₂CH₂(OCH₂CH₂)ₙOH, wherein n is equal to or higher than 0, preferably n ranges from 0 to 2, and more preferably the glycol is selected from monoethylene glycol and diethylene glycol.

6. The adhesive composition of any one of claims 3 to 5, comprising:
- 28 wt.% to 51 wt.% of at least one vegetable extract comprising polyflavonoids,
- 0.04 wt.% to 0.5 wt.% of at least one surfactant selected from anionic and non-ionic surfactants, the surfactant being added as such or obtained in situ by addition of a base, preferably between 0.02 wt.% to 0.3 wt.% of ethanolamine,
- 0.6 wt. % to 7.4 wt.% of hydrogenated or partially hydrogenated palm oil,
- 0.06 wt. % to 0.8 wt.% of soy oil,
- 0 to 17 wt.% of a viscosity reducing agent preferably selected from glycol, triacetin and a combination thereof; and
- 32 wt.% to 65 wt.% of water;
wherein all amounts are expressed by weight in respect to the total weight of the adhesive composition, and the sum of these amounts is equal to or lower than 100 %;
wherein the viscosity of the adhesive composition is preferably from 10 cP to 1000 cP, more preferably from 20 cP to 600 cP, measured at 25°C and shear rate 100 s⁻¹.

7. An adhesive system **characterized in that** it comprises, isolated one of another:
- Component A: the adhesive composition as defined in any one of claims 1 to 6, and
- Component B: at least one hardener agent, preferably the at least one hardener agent is comprised in a hardening composition further comprising water.

8. The adhesive system of claim 7, wherein component A is the adhesive composition as defined in any one of claims 3 to 6, and the hardener agent is selected from hexamine, tris(hydroxymethyl)nitromethane, glyoxal, Lewis acids, 2,5-dihydroxymethylfuran, 2,5-dihydroxymethylfuran moieties, polyethyleneimine (PEI) and any combination thereof, preferably hexamine.

9. The adhesive system of claim 8, comprising:
- Component A: the adhesive composition as defined in claim 6, and
- Component B: the hardening composition comprising: 2 to 12 parts by weight of hexamine, wherein the hexamine is comprised in an aqueous solution with a concentration between 30 wt.% 42 wt.%, and
the amount of hexamine is expressed as parts by weight with respect to 100 parts by weight of solid content of the vegetable extract present in the adhesive composition.

10. An adhesive mixture comprising component A and component B as defined in any one of claims 7 to 9.

11. Use of the adhesive composition as defined in any one of claims 1 to 6, the adhesive system as defined in any one of claims 7 to 9 or the adhesive mixture as defined in claim 10 for manufacturing wood composite boards, preferably fibreboards, particleboards, chipboards, plywood, paperboards or oriented strand board; or fibreglass insulations or rock wool insulations.

12. Wood composite boards comprising lignocellulosic fibres adhered by an adhesive mixture as defined in claim 10, preferably the wood composite board is a MDF board which at least complies with the requirements for structural board for use in dry conditions (MDF.LA) according to UNE-EN 622-5: 2010; or the wood composite board is a particleboard which at least complies with the requirements for category P1, P2 or P4 according to UNE-EN-312: 2010.
